# EUROPEAN PATENT SPECIFICATION

(11) **EP 1 608 484 B1**
(45) Date of publication and mention of the grant of the patent: **24.12.2008**
(21) Application number: 03720852.7
(22) Date of filing: 01.04.2003
(51) Int. Cl.: B23Q 16/10, B23Q 7/02, B23B 3/16

(54) **TOOL-HOLDER TURRET**
WERKZEUGREVOLVER
TOURELLE POUR PORTE-OUTILS

(43) Date of publication of application: 28.12.2005
(73) Proprietor: DUPLOMATIC AUTOMAZIONE S.P.A., 20025 Legnano (MI) (IT)
(72) Inventor: DE BERNARDI, Franco, I-21052 Busto Arsizio (IT)
(74) Representative: Perani, Aurelio
(86) International application number: PCT/IT2003/000194
(87) International publication number: WO 2004/087370

(56) References cited:
- EP-A- 0 782 901
- US-A- 5 664 470
- US-A1- 2002 170 397
- PATENT ABSTRACTS OF JAPAN vol. 017, no. 520 (M-1482), 20 September 1993 (1993-09-20) & JP 05 138410 A (OKUMA MACH WORKS LTD), 1 June 1993 (1993-06-01)
- PATENT ABSTRACTS OF JAPAN vol. 017, no. 324 (M-1433), 21 June 1993 (1993-06-21) & JP 05 038607 A (MURATA MACH LTD), 19 February 1993 (1993-02-19)

## Description

This invention relates to a tool-holder turret of the type comprising a stationary base body having a cavity which extends along a longitudinal axis, a tool-holder disk which can rotate with respect to the stationary base body about an axis of rotation coaxial with and coinciding with the said longitudinal axis, immobilising means to immobilise and release the said tool-holder disk in relation to the said stationary base body, a first tubular member acting on the said immobilising means which can be moved axially between a first position in which the tool-holder disk is immobilised on the stationary base and a second position in which the tool-holder disk is released, actuator means to move the said first tubular member between the said positions in which the turret is immobilised and released, control means to move the said tool-holder disk between working positions which are at an angular distance from each other about the said longitudinal axis, the said control means to move the tool-holder disk between the working positions comprising a second tubular member with an axial cavity open at both ends positioned concentrically with the said longitudinal axis within the said tubular member (see, for example, EP-0 782 901-A).

Tool-holder turrets of the type indicated above are known in the art and are commonly used to carry out turning and/or milling operations on workpieces, with the turret being mounted on the machine tool in conventional positions.

An example of such a turret is illustrated in document US-A-5,787,767.

In accordance with the abovementioned known art, the rotating disk bearing the working tools is operated by control means comprising a motor shaft which is coaxial and concentric with the longitudinal axis of the turret, which is connected to the disk at one end and to the electric motor at the other end, with suitable gearwheels in-between.

The electric motor is commonly mounted outside the base body of the turret.

Positioning the motor outside the turret body gives rise to cost problems making it necessary to use gear mechanisms to provide the connection between the motor shaft and the shaft of the rotating tool-holder disk, as well as dimensional problems when mounting the turret on the machine tool.

It has been suggested in the art that the electric motor driving the tool-holder disk should be housed directly within the body of the said disk, which in this way lies in a position concentric with the rotor, with a significant reduction in the axial dimensions of the turret.

An example of such a connection is illustrated in US-A-2002/0170397.

Although reducing the problems of the axial dimensions of the turret body, direct connection between the rotor of the motor and the tool-holder disk in accordance with the solution in the abovementioned known art nevertheless gives rise to a number of appreciable disadvantages, the most important of which is that tool-holders with a radial tang of the standard type, for example DIN69880, cannot be fitted onto the disk unless the radial dimensions of the tool-holder disk are unacceptably increased, and also tool-holders having a radial tang of the rotating type cannot be fitted.

The functioning of the latter in fact requires that devices for the transmission of motion, which are also positioned in a radial direction with respect to the axis of the turret, for which there is no room in the situation illustrated in the said document, have to be housed.

In the illustrated example of the known art the said devices must in fact pass through the rotor of the motor in a radial direction in order to reach the periphery of the disk where the members which connect and transmit motion to the rotating tools are commonly housed.

Another solution in the known art relating to the mounting of the electric motor within the hollow body of a turret with direct connection between the rotor and the tool-holder disk is illustrated in document US-A 5,664,470.

In accordance with the technical solution illustrated in the abovementioned document the electric motor is housed within the stationary base body of the turret with the stator fixed to the latter through a flexible wall located at the end of the stator and positioned transversely to the axis of the turret.

Similarly the part of the rotor facing the tool-holder disk is axially connected to the latter through the flexible flange of a tubular member which is concentric with the axis of the turret, transverse to the said turret.

It follows that in the known art both the stator and the rotor are free to float to follow the axial movements imposed on the rotor as a consequence of the axial movements of the tool-holder disk when it is immobilised and released within the confines of the stationary body of the turret.

This is a technical solution which is subject to possible frequent breakages of the flexible members through which the motor is connected to the tool-holder disk and to the body of the turret, not to mention the disadvantages which may occur as a consequence of loss of coaxiality between the stator and rotor of the motor which may also give rise to jamming of the motor and render the turret unusable.

The purpose of this invention is therefore to provide a solution in which the tool-holder disk is connected directly to the rotor part of the electric drive motor to bring about angular movements between the working positions of the tools, thus overcoming the disadvantages incurred in the known art.

Another object of the invention is to make it possible to position tools of the rotating type, such as, for example, tools for drilling, milling and the like, as well as tools of the fixed type, on the tool-holder disk so as to ensure a high degree of versatility.

These objects are accomplished by the mechanism according to the invention as described in claim 1.

Other advantages and characteristics of the present invention will become clear from the following detailed description which is given with reference to the appended drawings which are provided purely by way of non-limiting example and in which:
- Figure 1 shows a view in longitudinal cross-section of a turret according to the invention designed for the fitting of radial tool-holders for tools of the fixed type,
- Figure 2 shows a detail of a tool-holder disk for a turret of the type illustrated in Figure 1 suitable for the fitting of axial tool-holders for tools of the fixed type,
- Figure 3 shows a front view of the tower in Figure 1 from the side of the tool-holder disk,
- Figure 4 shows a rear view of the turret in Figure 1,
- Figure 5 shows a longitudinal cross-section of a turret according to the invention designed for the fitting of radial tang tool-holders for tools of the rotating type.

With reference to the aforesaid figures, 1 indicates the stationary base body of the turret which is provided with axial cavity 2 extending along longitudinal axis X-X. Tool-holder disk 3 is rotatably mounted about an axis of rotation which is coaxial with and coincides with axis X-X. A first annular member 4, rendered of one piece with body 1 through bolts as indicated by 5, is mounted in a position concentric with axis X-X. This annular member 4 has a crown of teeth 6 which are therefore of one piece with body 1. A second annular member 7 with a corresponding crown of teeth 8 is positioned concentrically with first annular member 4. Annular member 7 is fixed.through bolt members 9 to tool-holder disk 3 and can therefore rotate together with the latter. A third annular member 10, provided with a corresponding toothed crown 11, facing crowns of teeth 6 and 8, is housed within cavity 2. This can be moved axially between a first position in which crown of teeth 11 simultaneously engages both crowns 6 and 8, consequently immobilising tool-holder disk 3, and a second position in which said crown of teeth 11 is disengaged from the teeth in the first and second crowns with the consequent possibility that tool-holder disk 3 can rotate.

The aforesaid first, second and third crowns of teeth as a whole constitute immobilising means for immobilising and releasing tool-holder disk 3. These means, indicated as a whole by 11a, can in a further embodiment be constructed in different ways, for example using coupling means of the multiple disk brake type.

Axial displacement of third annular member 10 which immobilises and releases disk 3 is brought about by a first tubular member 12 with corresponding actuator means 12a housed in cavity 2 in a position which is concentric with axis X-X, with interposed annular seals 13. These actuator means behave like a hydraulic piston within cavity 2 and are fed with hydraulic fluid in a conventional way, and for this reason are not described in detail.

As an alternative, the said actuator means may comprise a pneumatic control system.

The activation of tool-holder disk 3 when in the released position to make the necessary angular movements between working positions is brought about by an electric motor, indicated as a whole by 14, the casing 15 of which is axially secured to base body 1 of the turret and is therefore stationary together with the latter. The inside of housing 15 represents an extension of cavity 2 of the stationary body and is regarded as being an integral part of that cavity.

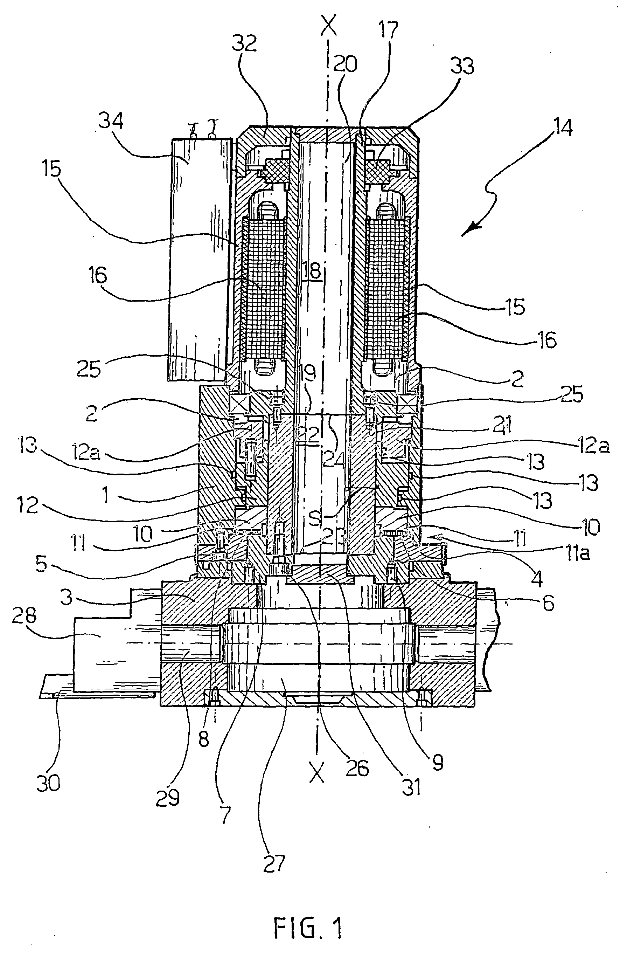

In the embodiment illustrated in Figure 1, motor 14 has its stator 16 fixed to housing 15 and rotor 17 positioned within the stator.

As an alternative electric motor 14 may also be of the type with an external rotor and a stator located concentrically within.

In both cases the outside diameter of electric motor 14 is designed to be less than or at most equal to the maximum outside diameter of third annular member 10 with teeth 11.

In accordance with this invention rotor 17 is in the form of hollow shaft with a through cavity 18 which is open at both ends 19 and 20.

A second tubular member 21 provided with a through axial cavity 22 opening at both ends 23 and 24 is positioned within cavity 2, concentrically with axis X-X and inside first tubular member 13.

Cavity 22 of said second tubular member 21 is defined by its circular crown having a predetermined constant radial thickness S over its entire axial extent. The amount of thickness S depends on both the magnitude of the torsional forces which have to be transmitted and the amount of radial space which is necessary to receive both bolt members 25 fixing end 24 to end 19 of rotor 17 and bolt members 26 fixing end 23 to tool-holder disk 3.

The latter is provided with a cavity 27 and in the embodiment illustrated in Figure 1 can receive a tool-holder 28 of the type with a radial tang 29 for fitting tools 30 of the fixed type.

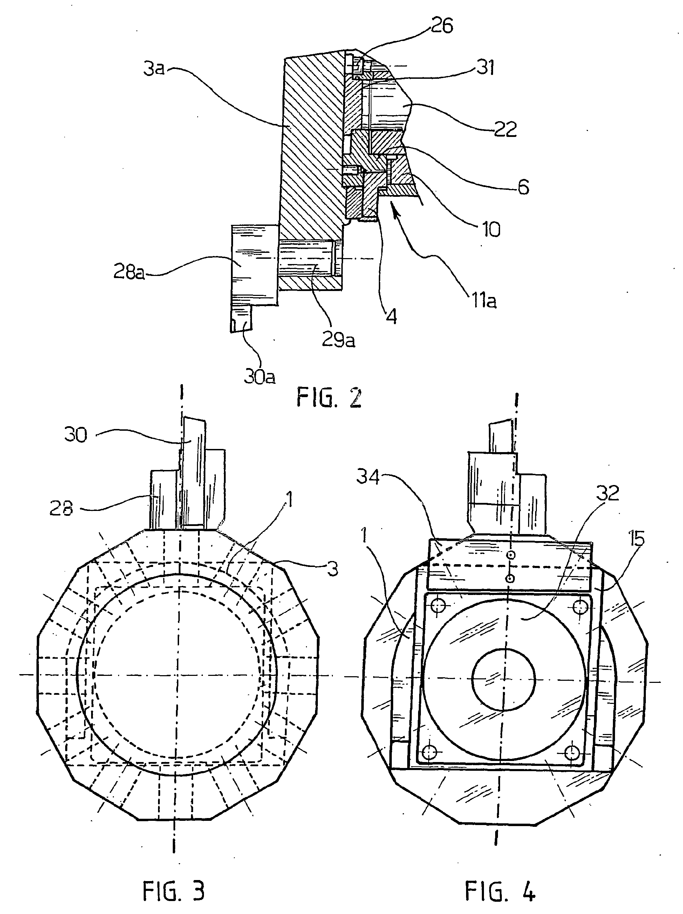

In the alternative illustrated in Figure 2, tool-holder disk 3a has no internal cavity and is designed to receive tool-holder 28a of the type with an axial tang 29a for mounting tools 30a of the fixed type.

In accordance with the embodiments in Figure 1 and Figure 2, because axial cavities 18 and 22 are not used, end 23, which faces tool-holder disk 3 or 3a, is closed off by a removable transverse cover 31.

Likewise, end 20 of hollow rotor shaft 17 is closed off by a removable cap 32 which is axially fixed to housing 15 of the motor.

In accordance with a preferred embodiment electric motor 14 is a servo motor which is associated in a conventional way with a position transducer 33 keyed onto rotor shaft 17.

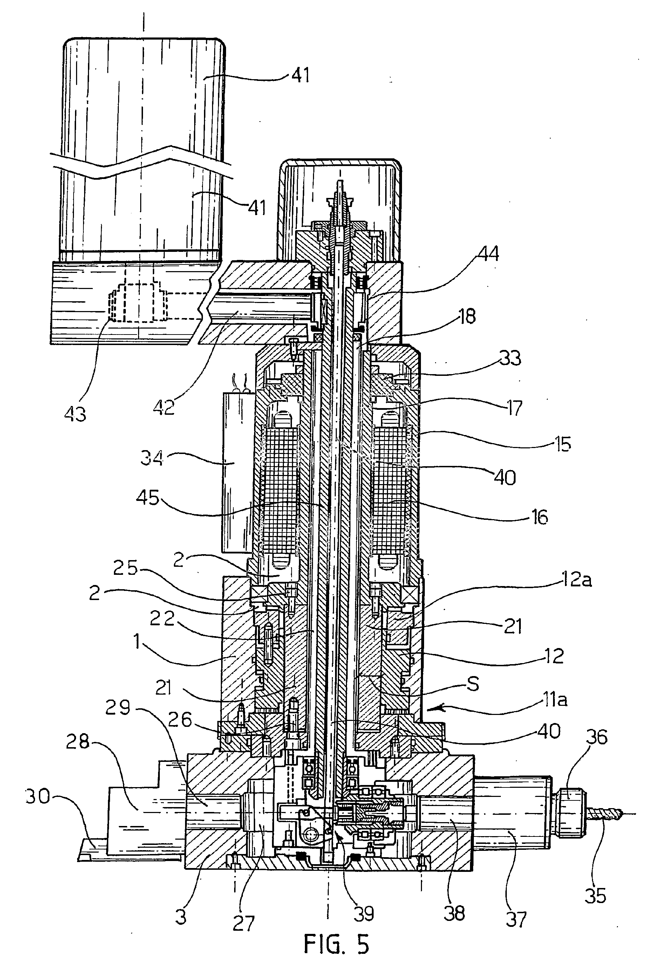

Servo motor 14 and transducer 33 are controlled by electronic devices which are located within housing 34 fitted onto or within the edge of the turret. With reference to Figure 5, the structural members of the turret corresponding to those described with reference to Figure 1 are indicated by the same reference numbers.

It will be seen that the turret is designed to operate with tools 35 of the rotating type mounted on mandrel 36 of tool-holder 37 inserted radially on tool-holder disk 3 with tang 38.

A drive unit, indicated as a whole by 39, which is of a conventional type, and which is housed in cavity 27 of disk 3, is provided for the rotation of tools 35. Rotatory motion of unit 39 is brought about through a drive shaft 40 which is caused to rotate by auxiliary motor 41 fixed to the stationary base of the turret and connected by a conventional series of transmission gears 42, 43 and 44.

Shaft 40 is housed within a supporting tube 45 which passes axially through adjacent cavities 18 and 22 of rotor 17 and second tubular member 21 from which cap 32 and correspondingly cover 31 have been removed.

Contiguous cavities 18 and 22 can also be used for the passage of pipes for fluids or electrical connections.

As indicated in Figure 5, in addition to tool-holder 37 for rotating tools 35, disk 3 may be equipped with a tool-holder 28 for fixed tools 30.

The turret according to the invention can therefore be adapted to operate with a tool-holder for fixed tools or with a tool-holder for tools of the rotating type while continuing to have very small axial and transverse dimensions.

Naturally, the principle of the invention remaining the same, the forms of embodiment and details of construction may be varied widely with respect to those described and illustrated, which have been given purely by way of example, without thereby departing from the scope of the invention which is defined by the appended claims.

## Claims

1. A tool-holder turret of the type comprising a stationary base body (1) having a cavity (2) which extends along a longitudinal axis (X-X), a tool-holder disk (3, 3a) which can rotate with respect to the stationary base body about an axis of rotation which is coaxial with and coincides with the said longitudinal axis (X-X), immobilising means (11a) to immobilise and release the said tool-holder disk (3) in relation to the said stationary base body (1), a first tubular member (12) acting on the said immobilising means (11a) which can be moved axially between a first position in which the tool-holder disk (3) is immobilised on the stationary base body (1) and a second position in which the tool-holder disk (3) is released, actuator means (12a) to move the said first tubular member (12) between the said positions in which the turret is immobilised and released, control means (14, 17, 21) to move the said tool-holder disk (3) between working positions which are spaced angularly apart about the said longitudinal axis, the said control means to move the tool-holder disk between the working positions comprising a second tubular member (21) with an axial cavity (22) which is open at both ends (23, 24) positioned concentrically with the said longitudinal axis (X-X) within the said first tubular member (12), **characterized in that** the second tubular member (21) is at one end (23) coaxially connected to the said tool-holder disk (3) and at the other end (24) coaxially connected to the rotor (17) of an electric motor (14), the said motor being provided with a through axial cavity (18), the connections (25, 26) being made rigidly at both ends with respect to both axial and rotational movement.

2. A turret according to claim 1 **characterized in that** the said immobilising means (11a) comprise a first crown of teeth (6) borne by the said stationary base body (1) and distributed around the said longitudinal axis (X-X) of the said cavity (2), a second crown of teeth (8) which is concentric with the said first crown of teeth and which is borne by the said rotating tool-holder disk (3), a third crown of teeth (11) fixed to a first tubular member (12) which can be moved axially between a first position immobilising the turret in which its teeth simultaneously engage the teeth of the said first and second crowns, and a second position in which the turret is released in which the teeth of the said third crown are disengaged from the teeth of the said first and second crowns.

3. A turret according to claim 1, **characterized in that** the said immobilising means (11a) comprise multiple disk brake coupling members.

4. A turret according to claim 1, **characterized in that** the maximum radial dimension of the said electric motor (14) is less than the outside radius of the said first crown of teeth (4) borne by the said stationary base body (1).

5. A turret according to one of claims 1 to 4, **characterized in that** the axial cavity (22) of the said second tubular member (21) is defined by a circular crown having a predetermined constant radial thickness (S) throughout the axial extent of the said tubular member.

6. A turret according to claim 5, **characterized in that** the said connections (25, 26) are made on the front of the circular crown of the said second tubular member (21).

7. A turret according to one of claims 1 to 6, **characterized in that** the rotor (17) of the said electric motor (14) is radially positioned outside the stator and the through axial cavity (18) is provided in the stator of the motor.

8. A turret according to one of claims 1 to 6, **characterized in that** the rotor (17) of the said electric motor (14) is positioned radially within the stator and the said through axial cavity is made in the rotor of the motor.

9. A turret according to any one of the foregoing claims **characterized in that** it comprises a removable cover member (31) positioned in the cavity (22) of the said second tubular member (21) to close off at least the end (23) of the said cavity facing the tool-holder disk (3).

10. A turret according to any one of claims 1 to 10, **characterized in that** the said electric motor (14) comprises a servo motor electronically associated with the position transducer (33) keyed onto the rotor (17) of the motor and electronic control means located in a housing (34) made within the turret.

## Patentansprüche

1. Werkzeugrevolver des Typs, der einen feststehenden Grundkörper (1) mit einer Aussparung (2) aufweist, die sich entlang einer Längsachse (X-X) erstreckt, eine Werkzeughalterplatte (3, 3a), die bezüglich des feststehenden Grundkörpers um eine Drehachse drehbar ist, die koaxial zu der Längsachse (X-X) ist und damit zusammenfällt, Fixiermittel (11a) zum Fixieren und Lösen der Werkzeughalterplatte (3) in Bezug zu dem feststehenden Grundkörper (1), ein erstes röhrenförmiges Element (12), das auf das Fixiermittel (11a) einwirkt, das axial bewegt werden kann zwischen einer ersten Position, in der die Werkzeughalterplatte (3) auf dem feststehenden Grundkörper (1) fixiert ist, und einer zweiten Position, in der die Werkzeughalterplatte (3) gelöst ist, Betätigungsmittel (12a) zum Bewegen des ersten röhrenförmigen Elements (12) zwischen den Positionen, in denen der Revolver fixiert und gelöst ist, Steuermittel (14, 17, 21) zum Bewegen der Werkzeughalterplatte (3) zwischen Arbeitspositionen, die winkelig voneinander um die Längsachse beabstandet sind, wobei das Steuermittel die Werkzeughalterplatte zwischen den Arbeitspositionen bewegen soll, ein zweites röhrenförmiges Element (21) mit einer axialen Aussparung (22) aufweisend, das an beiden Enden (23, 24) offen ist und entlang der Längsachse (X-X) zum ersten röhrenförmigen Element (12) konzentrisch angeordnet ist, **dadurch gekennzeichnet, dass** das zweite röhrenförmige Element (21) an einem Ende (23) koaxial mit der Werkzeughalterplatte (3) verbunden ist und am anderen Ende (24) koaxial mit dem Rotor (17) eines Elektromotors (14) verbunden ist, wobei der Motor mit einer durchgehenden axialen Aussparung (18) versehen ist, wobei die Verbindungen (25, 26) an beiden Enden jeweils bezüglich der axialen und der Drehbewegung starr gestaltet sind.

2. Revolver gemäß Anspruch 1, **dadurch gekennzeichnet, dass** das Fixiermittel (11a) einen ersten Zahnkranz (6) aufweist, der durch den feststehenden Grundkörper (1) getragen wird und um die Längsachse (X-X) der Aussparung (2) verteilt ist, einen zweiten Zahnkranz (8), der konzentrisch zum ersten Zahnkranz verläuft und der durch die rotierende Werkzeughalteplatte (3) getragen wird, einen dritten Zahnkranz (11), der an einem ersten röhrenförmigen Element (12) befestigt ist, das axial zwischen einer ersten Position bewegt werden kann, die den Revolver fixiert, wobei die Zähne gleichzeitig in die Zähne der ersten und zweiten Zahnkränze eingreifen, und einer zweiten Position, an der der Revolver gelöst ist, in der die Zähne des dritten Zahnkranzes nicht in die Zähne des ersten und zweiten Kranzes eingreifen.

3. Revolver gemäß Anspruch 1, **dadurch gekennzeichnet, dass** das Fixiermittel (11a) Mehrfach-Bremsscheiben-Kupplungselemente enthält.

4. Revolver gemäß Anspruch 1, **dadurch gekennzeichnet, dass** die maximale radiale Abmessung des Elektromotors (14) geringer ist als der Außenradius des ersten Zahnkranzes (4), der von dem feststehenden Grundkörper (1) getragen wird.

5. Revolver gemäß einem der Ansprüche 1 bis 4, **dadurch gekennzeichnet, dass** die axiale Aussparung (22) des zweiten röhrenförmigen Elements (21) durch einen ringförmigen Kranz definiert ist, der eine bestimmte konstante radiale Dicke (S) durch die axiale Erstreckung des röhrenförmigen Elements aufweist.

6. Revolver gemäß Anspruch 5, **dadurch gekennzeichnet, dass** die Verbindungen (25, 26) an der Vorderseite des ringförmigen Kranzes des zweiten röhrenförmigen Elements (21) ausgebildet sind.

7. Revolver gemäß einem der Ansprüche 1 bis 6, **dadurch gekennzeichnet, dass** der Rotor (17) des Elektromotors (14) radial außerhalb des Stators angeordnet ist und die durchgehende axiale Aussparung (18) im Motor-Stator vorgesehen ist.

8. Revolver gemäß einem der Ansprüche 1 bis 6, **dadurch gekennzeichnet, dass** der Rotor (17) des Elektromotors (14) radial im Stator angeordnet ist und die durchgehende axiale Aussparung (18) im Motor-Stator vorgesehen ist.

9. Revolver gemäß einem der obigen Ansprüche, **dadurch gekennzeichnet, dass** er ein entfernbares Abdeckelement (31) aufweist, das in der Aussparung (22) des zweiten röhrenförmigen Elements (21) positioniert ist, um wenigstens das Ende (23) der der Werkzeughalterplatte (3) zugewandten Aussparung abzuschließen.

10. Revolver gemäß einem der Ansprüche 1 bis 10, **dadurch gekennzeichnet, dass** der Elektromotor (14) einen Servomotor aufweist, der elektronisch mit dem Positionssignalgeber (33) verbunden ist, der auf dem Rotor (17) des Motors verkeilt ist, und elektronische Steuermittel, die sich in einem Gehäuse (34) im Revolver befinden.

## Revendications

1. TOURELLE PORTE-OUTILS du type comportant un corps de base fixe (1) ayant une cavité (2) qui s'étend le long d'un axe longitudinal (X-X), une rondelle porte-outils (3, 3a) qui peut tourner par rapport au corps de base fixe autour d'un axe de rotation qui est coaxial et qui coïncide avec l'axe longitudinal (X-X) susdit, des moyens de blocage (11a) pour bloquer et relâcher la rondelle porte-outils (3) susdite par rapport au corps de base fixe (1) susdit, un premier membre tubulaire (12) agissant sur les moyens de blocage (11a) susdits qui peuvent être déplacés axialement entre une première position où la rondelle porte-outils (3) est bloquée sur le corps de base fixe (1) et une seconde position où la rondelle porte-outils (3) est relâchée, des moyens d'actionnement (12a) pour déplacer le premier membre tubulaire (12) susdit entre les positions susdites où la tourelle est bloquée et relâchée, des moyens de commande (14, 17, 21) pour déplacer la rondelle porte-outils (3) susdite entre des positions de travail qui sont écartées angulairement autour de l'axe longitudinal susdit, les moyens de commande susdits pour déplacer la rondelle porte-outils entre les positions de travail comportant un second membre tubulaire (21) avec une cavité axiale (22) qui est ouverte aux deux extrémités (23, 24) positionnées de façon concentrique avec l'axe longitudinal (X-X) susdit à l'intérieur du premier membre tubulaire (12) susdit, **caractérisée en ce que** le second membre tubulaire (21) est relié coaxialement, à une extrémité (23), à la rondelle porte-outils (3) susdite et relié coaxialement, à l'autre extrémité (24), au rotor (17) d'un moteur électrique (14), le moteur susdit étant muni d'une cavité de passage axiale (18), les raccordements (25, 26) étant réalisés rigidement aux deux extrémités par rapport au mouvement axial et rotatif.

2. TOURELLE selon la revendication 1, **caractérisée en ce que** le moyens de blocage (11a) susdits comportent une première couronne de dents (6) soutenue par le corps de base fixe (1) susdit et distribuée autour de l'axe longitudinal (X-X) susdit de la cavité (2) susdite, une seconde couronne de dents (8) qui est concentrique avec la première couronne de dents susdite et qui est soutenue par la rondelle porte-outils rotative (3) susdite, une troisième couronne de dents (11) fixée à un premier membre tubulaire (12) qui peut être déplacée axialement entre une première position bloquant la tourelle où les dents s'engagent simultanément dans les dents des première et seconde couronnes susdites, et une seconde position dans laquelle la tourelle est relâchée où les dents de la troisième couronne susdite sont désengagées des dents des première et seconde couronnes susdites.

3. TOURELLE selon la revendication 1, **caractérisée en ce que** les moyens de blocage (11a) susdits comportent des membres multiples d'accouplement du frein de la rondelle.

4. TOURELLE selon la revendication 1, **caractérisée en ce que** la dimension radiale maximum du moteur électrique (14) susdit est inférieure au rayon extérieur de la couronne de dents (4) susdite soutenue par le corps de base fixe (1) susdit.

5. TOURELLE selon l'une des revendications 1 à 4, **caractérisée en ce que** la cavité axiale (22) du second membre tubulaire (21) susdit est définie par une couronne circulaire ayant une épaisseur radiale constante prédéterminée (S) tout au long de l'étendue axiale du membre tubulaire susdit.

6. TOURELLE selon la revendication 5, **caractérisée en ce que** les raccordements (25, 26) susdits sont réalisés au recto de la couronne circulaire du second membre tubulaire (21) susdit.

7. TOURELLE selon l'une des revendications 1 à 6, **caractérisée en ce que** le rotor (17) du moteur électrique (14) susdit est positionné radialement à l'extérieur du stator et que la cavité axiale de passage (18) est réalisée dans le stator du moteur.

8. TOURELLE selon l'une des revendications 1 à 6, **caractérisée en ce que** le rotor (17) du moteur électrique (14) susdit est positionné radialement à l'intérieur du stator et que la cavité axiale de passage susdite est réalisée dans le rotor du moteur.

9. TOURELLE selon n'importe quelle des revendications précédentes, **caractérisée en ce qu'**elle comporte un membre de couverture amovible (31) positionné dans la cavité (22) du second membre tubulaire (21) susdit pour isoler au moins l'extrémité (23) de la cavité susdite vis-à-vis de la tourelle porte-outils (3).

10. TOURELLE selon n'importe quelle revendication 1 à 10, **caractérisée en ce que** le moteur électrique (14) susdit comporte un servomoteur associé électroniquement au transducteur de position (33) agencé sur le rotor (17) du moteur et aux moyens de commande électronique aménagés dans un boîtier (34) réalisé à l'intérieur de la tourelle.
